# DEMANDE DE BREVET EUROPEEN

(11) **EP 0 829 974 A2**
(43) Date de publication de la demande: **18.03.1998**
(21) Numéro de dépôt: 97402014.1
(22) Date de dépôt: 28.08.1997
(51) Int. Cl.: H04B 7/185

(54) **Relais pour système de radiocommunications**

(30) Priorité: 17.09.1996 FR 9611303
(71) Demandeur: ALCATEL ESPACE, F-92737 Nanterre Cédex (FR)
(72) Inventeur: Collomby, Michel, 31600 Saubens (FR)
(74) Mandataire: Pothet, Jean Rémy Emile Ludovic

(57) **Abrégé**

L'invention concerne un relais destiné à être utilisé dans un réseau de radiocommunications pour relayer un échange de données entre des première et seconde stations (1, 5) entre lesquelles un échange de données est impossible à travers le seul réseau de radiocommunications. Le relais est caractérisé en ce qu'il comprend:
des premiers moyens de conversion pour convertir un premier signal radioélectrique reçu en provenance de la première station sous la forme de premiers messages reçus, et convertir des premiers messages à émettre sous la forme d'un premier signal radioélectrique émis à destination de la première station,
des seconds moyens de conversion pour convertir un second signal radioélectrique reçu en provenance de la seconde station sous la forme de seconds messages reçus, et convertir des seconds messages à émettre sous la forme d'un second signal radioélectrique émis à destination de la seconde station, et
des moyens de gestion applicative pour gérer lesdits premiers messages reçus et à émettre et lesdits seconds messages reçus et à émettre.

## Description

La présente invention concerne de manière générale un système de radiocommunications, typiquement avec des terminaux mobiles. Le système de radiocommunications est par exemple un réseau de radiocommunications par satellite ou terrestre. Plus précisément, l'invention a trait à un relais destiné à assurer la couverture d'une zone géographique inaccessible à travers le seul réseau de radiocommunications.

Les systèmes globaux de communications mobiles utilisant des satellites comme relais sont en développement constant et leurs applications s'étendent à de nombreux domaines. Initialement limités aux applications maritimes, ces systèmes s'étendent aujourd'hui aux applications terrestres. Ainsi, des systèmes de suivi et de messagerie sont en exploitation pour les transports terrestres. Des systèmes nouveaux en cours de développement visent, parmi d'autres applications, le suivi automatique de cargaisons ou de flottes (camions, containers, voitures de location, etc...), la télégestion industrielle (énergie, capteurs, irrigation...), la sécurité des biens et des personnes (détection d'intrusion, sauvetage, suivi des matières à risques, alarmes d'incendie, inondations ...). Ces systèmes utilisent par exemple des satellites en orbite géostationnaire, intermédiaire ou basse qui relaient les liaisons entre des premières stations, telles que stations de connexion, et des secondes stations, telles que terminaux mobiles ou balises.

Dans ces systèmes, une communication entre une première station et une seconde station, par exemple via un satellite dans un réseau satellitaire, n'est plus assurée si le bilan de liaison n'aboutit pas à une marge positive suffisante, typiquement en cas d'atténuation des signaux due à l'environnement (végétations, intempéries, constructions, ...) ou en cas de détérioration d'antenne (arrachement, court-circuit, ...). Selon le choix des fréquences et les marges adoptées lors de la conception du système, une perte de service se produit plus ou moins fréquemment. Une telle perte de service est typiquement permanente si la seconde station est enfermée dans un local souterrain, tel que parking, ou un local métallique, tel que coque de navire. Elle peut être temporaire en dépendance du trajet suivi par la seconde station, typiquement en fonction de la nature de la végétation, de la présence d'obstacles tels que tunnels, immeubles, ou en cas de non permanente ou non totale des relais satellitaires.

Les applications nécessitant un suivi permanent ne peuvent être garanties qu'en dehors des zones, dites "zones d'ombre", qui sont inaccessibles à travers le seul réseau de radiocommunications. Il en résulte alors, outre une dégradation du service pour les usagers, une perte générale de performance du système. En effet, beaucoup de ces systèmes fonctionnent par interrogation et attente de réponse. L'absence de réponse d'une station perturbe le fonctionnement global en utilisant inutilement une capacité précieuse, en résultat des répétitions d'appel, de comptes-rendus, etc...

Pour remédier à cet inconvénient, la technique antérieure prévoit d'utiliser un relais, pouvant intégrer une fonction d'amplification, qui est destiné à assurer la couverture d'une zone d'ombre. Ainsi, à titre d'exemple, dans le G.S.M (Global System for Mobile Communications), des relais, dits "boosters" sont utilisés pour couvrir des rues inaccessibles par les seules stations de base du réseau. Un tel relai inclut une première antenne destinée à recevoir en provenance et émettre à destination d'une station de base, un amplificateur et une seconde antenne dirigée vers la zone d'ombre à couvrir.

L'inconvénient principal de cette solution de la technique antérieure est de ne tirer aucun profit, par exemple en termes d'économie de capacité du réseau, de l'appartenance d'une station à une zone d'ombre. En effet, la solution de la technique antérieure résout le problème de l'inaccessibilité à une station à travers le réseau sans utiliser avantageusement cette inaccessibilité.

L'invention vise à remédier à cet inconvénient en fournissant un relais pour réseau de radiocommunications particulièrement avantageux.

A cette fin, un relais destiné à être utilisé dans un réseau de radiocommunications pour relayer un échange de données entre des première et seconde stations entre lesquelles un échange de données est impossible à travers le seul réseau de radiocommunications, est caractérisé selon l'invention en ce qu'il comprend:
des premiers moyens de conversion pour convertir un premier signal radioélectrique reçu en provenance de la première station sous la forme de premiers messages reçus, et convertir des premiers messages à émettre sous la forme d'un premier signal radioélectrique émis à destination de la première station,
des seconds moyens de conversion pour convertir un second signal radioélectrique reçu en provenance de la seconde station sous la forme de seconds messages reçus, et convertir des seconds messages à émettre sous la forme d'un second signal radioélectrique émis à destination de la seconde station, et
des moyens de gestion applicative pour gérer les premiers messages reçus et à émettre et les seconds messages reçus et à émettre.

Ces moyens de gestion assurent ainsi une véritable gestion applicative dans le système considéré, et non pas seulement des fonctions d'amplification, ou éventuellement de correction d'erreur dans les messages.

Ainsi, les moyens de gestion simulent la première station, respectivement seconde station, vis à vis de ladite seconde station, respectivement première station.

Avantageusement, les moyens de gestion comprennent des moyens pour mémoriser des données d'identification qui sont reçues en provenance de l'une au moins desdites première et seconde stations, pour adresser ladite première, respectivement seconde, station.

Par ailleurs, les moyens de gestion peuvent comprendre des moyens pour produire un message d'interrogation qui est converti par lesdits seconds moyens de conversion sous la forme dudit second signal radioélectrique émis à destination de ladite seconde station.

Selon une réalisation, les moyens de gestion comprennent des moyens pour sélectionner certains seconds messages de réponse parmi des seconds messages de réponse reçus issus des seconds moyens de conversion, en réponse à l'émission sous la forme dudit second signal radioélectrique, de messages d'interrogation respectifs, et des moyens pour reproduire lesdites certains seconds messages de réponse sélectionnés, en des premiers messages émis sous la forme dudit premier signal radioélectrique à destination de la première station.

Aussi, les moyens de gestion comprennent des moyens pour produire des messages d'accusé de réception à émettre qui sont convertis par les premiers moyens de conversion sous la forme du premier signal radioélectrique émis à destination de la première station.

Dans le cas où le réseau de radiocommunications est un réseau par satellite, les moyens de gestion peuvent comprendre des moyens pour retarder l'émission à destination de la première station, à travers les premiers moyens de conversion, de messages reçus en provenance de ladite seconde station, à travers lesdits seconds moyens de conversion, en fonction d'une position orbitale d'un satellite.

D'autres caractéristiques et avantages de la présente invention apparaîtront plus clairement à la lecture de la description qui suit, en référence aux dessins annexés correspondants, dans lesquels :
- la figure 1 représente sous forme schématique un réseau de radiocommunications utilisant un relais pour la couverture d'une zone d'ombre inaccessible à travers ledit réseau;
- la figure 2 est un bloc-diagramme d'un relais selon l'invention; et
- la figure 3 est un bloc-diagramme d'une seconde station placée dans une zone d'ombre.

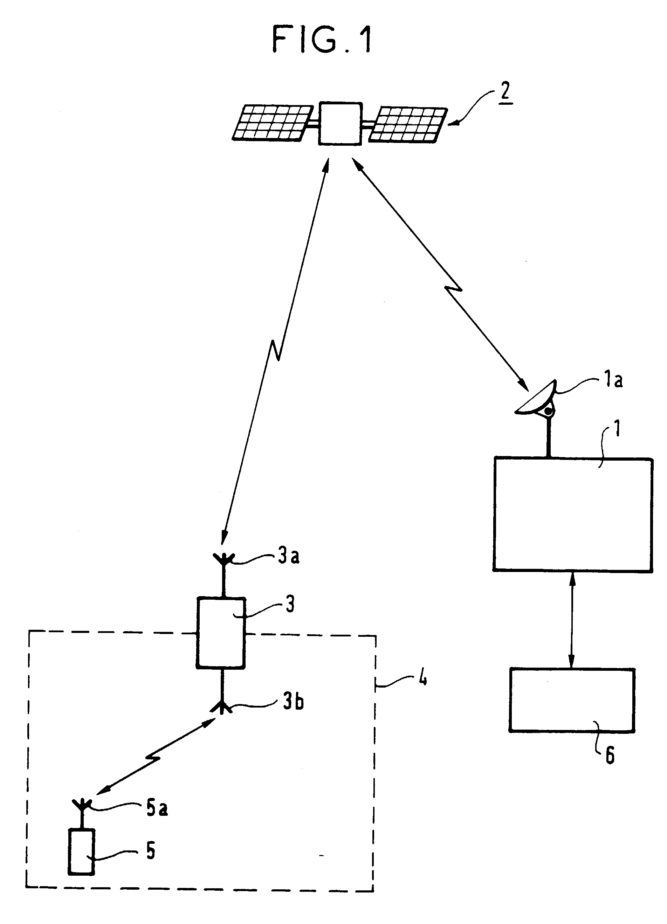

En référence à la figure 1, selon une réalisation donnée à titre d'exemple, un réseau de radiocommunications pour la mise en oeuvre d'un relais selon l'invention comprend (a) - au moins une station de connexion 1, dite première station, à laquelle sont connectés des centres de traitement 6, (b) - au moins un terminal mobile ou balise, dite seconde station, 5, et (c) - au moins un satellite 2 via lequel sont établies des communications entre la station de connexion 1 et la balise 5. La balise 5 est supposée incluse dans une zone d'ombre 4 qui empêche toute liaison directe entre elle-même et le satellite 2. Le relais de l'invention 3 est disposé typiquement à la frontière de la zone d'ombre 4. Il est muni d'une première antenne 3a destinée à émettre vers et recevoir en provenance du satellite 2, et d'une seconde antenne 3b destinée à émettre vers et recevoir en provenance de la balise 5 incluse dans la zone d'ombre 4.

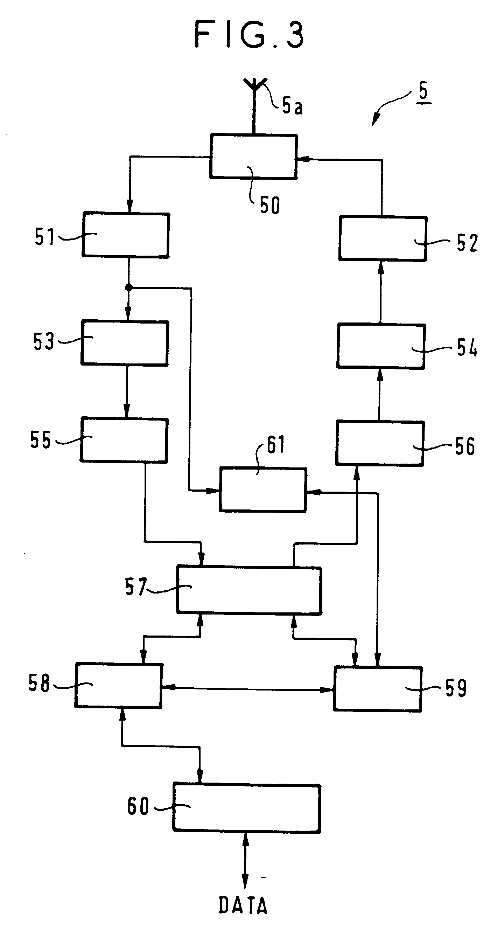

Comme montré dans la figure 3, la balise 5 comprend typiquement, (a) - en réception, un circuit de réception 51, un circuit de décodage et démodulation 53, un circuit de gestion de trame 55, (b) - en émission, un circuit de gestion de trame 56, un circuit de codage et modulation 54 et un circuit d'émission 52, ainsi que (c) - un duplexeur 50, un circuit de gestion de transaction et de protocole 57, un circuit de gestion des requêtes 58, un circuit de gestion applicative 59, un circuit d'interface 60 et un circuit de gestion de localisation 61. Ce circuit de gestion de localisation peut déterminer la localisation de la balise soit à partir de signaux radioélectriques propres au système, soit en utilisant un récepteur GPS.

Il est supposé dans la description qui suit que le fonctionnement standard de la balise 5 en dehors d'une zone d'ombre 4 est le suivant. La balise 5 émet périodiquement à destination de la station de connexion 1 des messages incluant des informations telles que informations horaires, informations de localisation géographique de la balise, informations d'événement(s) détecté(s) par exemple par capteur, etc.... L'homme du métier conviendra que selon un autre mode de fonctionnement, la balise 5 pourrait émettre à destination de la station de connexion 1 de tels messages en réponse à la réception de messages d'interrogation reçus en provenance de la station de connexion 1.

Dans la figure 3, les informations d'événement(s) détecté(s) par exemple par capteur sont référencées par le repère DATA. Typiquement, les informations horaires sont fournies par une horloge dans le circuit de gestion applicative 59 et les informations de localisation géographique sont obtenues par localisation GPS par satellite, sous le contrôle du circuit de gestion applicative 59. Le fonctionnement de la balise est donc le suivant. Le circuit de gestion applicative 59 transmet une requête au circuit de gestion des requêtes 58 pour la fourniture d'informations d'événement détecté. Le circuit 58 sollicite en réponse le circuit d'interface 60, typiquement connecté à un capteur, pour lui fournir ces informations d'événement détecté, ces dernières étant ensuite transmises au circuit de gestion applicative 59. Parallèlement, le circuit de gestion applicative 59 sollicite le circuit de gestion de localisation 61 dont une entrée est connectée à une sortie du circuit de réception 51. Le circuit de réception 51 reçoit typiquement trois signaux de localisation envoyés par des satellites GPS qui permettent au circuit de gestion de localisation 61 de déterminer la position de la balise 5. Cette information de localisation de la balise est alors transmise au circuit applicatif 59. Ce dernier mémorise donc, en résultat de ces opérations, les informations horaire, de localisation géographique, et d'événement(s) détecté(s). Ces informations sont alors transmises, sous la forme d'un message, au circuit de gestion de transaction et de protocole 57. Ce circuit 57 est chargé du traitement des messages reçus selon les protocoles définis, de l'acheminement sous forme de paquets de ces messages, des corrections d'erreurs affectant ces paquets lors de leur acheminement à travers le réseau. La correction d'erreur est assurée par une liaison bidirectionelle entre la balise 5 et la station de connexion 1. De tels paquets sont alors soumis au circuit de gestion de trames 56 qui assure la mise au format trame des paquets ainsi que le séquencement temporel d'émission de ces paquets. Ces trames sont émises à destination de la station de connexion à travers le circuit de codage et de modulation 54 et le circuit d'émission 52.

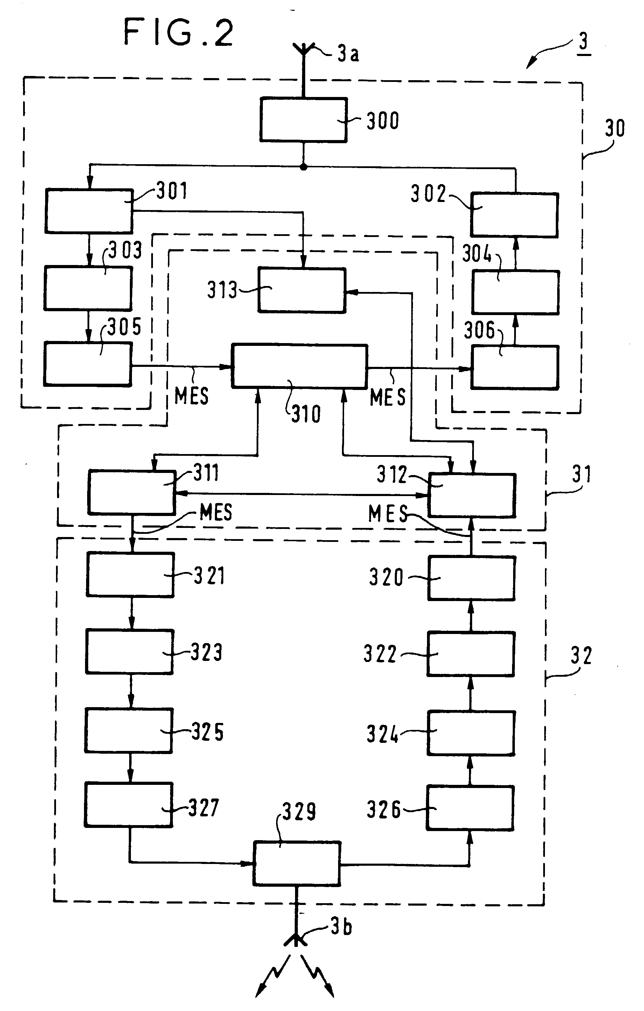

En référence à la figure 2, l'invention vise à utiliser avantageusement le fait que la balise, ou seconde station, 5 est incluse dans une zone d'ombre 4 pour utiliser un relais "intelligent" qui possède par exemple pour objectif de réduire le trafic supporté par le réseau (par exemple en limitant l'émission des messages en réponse seulement à des évènements prédéfinis ou en ne retransmettant que certaines des informations qui sont incluses dans les différents messages reçus), pallier au défaut de réception des signaux GPS en provenance des satellites GPS, ou plus généralement supporter des fonctions spécifiques qui peuvent être mises en oeuvre de manière locale dans cette zone d'ombre sans requérir une modification des autres éléments du réseau.

Il est avantageusement prévu de s'affranchir de tout conflit pouvant exister, vu de la station de connexion, entre le relais 3 et la balise 5, ou vu de la balise, entre la station de connexion 1 et le relais 3. La suppression de tels conflits passe par l'intégration d'un protocole de gestion de conflit défini typiquement entre la station de connexion 1 et le relais 3. Par exemple, il peut être prévu, selon une réalisation, que le relais, sur réception d'un message possédant un niveau suffisant de qualité en réception et véhiculant une adresse de balise non déjà identifiée, télécommande la balise considérée sur une ressource temporelle, spectrale ou de code particulière. Cette ressource est définie dans le système et est par convention non utilisée par les stations de connexions ou les autres balises dans la zone d'ombre considérée.

En référence à la figure 2, un relais 3 selon l'invention comprend une première unité de conversion 30 fonctionnant selon le standard radioélectrique et le protocole de la station de connexion, ou première station, 1, une unité de gestion 31 et une seconde unité de conversion 32 fonctionnant selon le standard radioélectrique du satellite relai 2 et le protocole de la balise, ou seconde station, 5. Le relais 3 est destiné à relayer un échange de données entre la station de connexion, ou première station, 1 et la balise, ou seconde station, 5 entre lesquelles deux stations un échange de données est impossible à travers le seul réseau de radiocommunications.

La première unité de conversion 30 comprend un duplexeur 300, une chaîne de réception incluant en cascade un circuit de réception 301, un circuit de démodulation et décodage 303 et un circuit de gestion de trame reçue 305, une chaîne d'émission incluant en cascade un circuit de gestion de trame à émettre 306, un circuit de codage et modulation 304 et un circuit d'émission 302. Le duplexeur 300 est relié à l'antenne 3a émettant à destination et recevant en provenance de la station de connexion 1, à une sortie du circuit d'émission 302 et à une entrée du circuit de réception 301. L'unité de gestion 31 comprend un circuit de gestion de transaction et de protocole 310, un circuit de gestion des requêtes 311, un circuit de gestion applicative 312 et un circuit de gestion de localisation 313. La seconde unité de conversion 32 comprend un duplexeur 329, une chaîne d'émission incluant un circuit de gestion de paquet 321, un circuit de gestion de trame 323, un circuit de codage et modulation 325 et un circuit d'émission 327, et une chaîne de réception incluant un circuit de réception 326, un circuit de décodage et démodulation 324, un circuit de gestion de trame 322 et un circuit de gestion de paquet 320. Le duplexeur 329 est relié à l'antenne 3b émettant à destination et recevant en provenance de la zone d'ombre 4, à une sortie du circuit d'émission 327 et à une entrée du circuit de réception 326.

La première unité de conversion 30 convertit un premier signal radioélectrique reçu en provenance de la station de connexion 1 sous la forme de premiers messages reçus, et convertit des premiers messages à émettre sous la forme d'un premier signal radioélectrique émis à destination de la station de connexion 1.

La seconde unité de conversion 32 convertit un second signal radioélectrique reçu en provenance de chaque balise incluse dans la zone d'ombre 4 sous la forme de seconds messages reçus, et convertit des seconds messages à émettre sous la forme d'un second signal radioélectrique émis à destination de la balise considérée 5.

Ces premiers messages reçus et à émettre et ces seconds messages reçus et à émettre sont produits, traités ou plus généralement gérés par une application donnée dans le circuit de gestion applicative 312 dans l'unité de gestion 31. Ainsi, le relais 3 apparaît non pas comme un simple organe d'amplification mais intègre une véritable capacité de traitement grâce à l'unité de gestion 31.

Après son entrée dans une zone d'ombre 4, la balise est amenée à émettre un message sous la forme d'un signal radioélectrique émis. Le protocole de gestion de conflit existant entre le relais 3 et la station de connexion 1 inhibe tout risque de conflits entre le relais 3 et la balise 5 dans le cas où cette dernière est proche du relais 3 sans être totalement inaccessible à travers le réseau.

La balise 5 dans la zone 4 produit des messages incluant par exemple des informations d'adresse de la balise 5, informations horaires, informations de localisation géographique et informations d'événement(s) détecté(s), et émet ces messages à destination du relais 3 sous la forme d'un second signal radioélectrique. Ce second signal radioélectrique est reçu par l'antenne 3b pour être converti par la chaîne de réception 326-324-322-320 dans l'unité de conversion 32 sous forme de messages restitués MES. Dans un but d'économie de la capacité du système, tous les messages ainsi restitués ne sont pas transmis à destination de la station de connexion 1, mais "filtrés" par le circuit de gestion applicative 312 de sorte à n'émettre à destination de ladite station de connexion 1 que les messages essentiels, tels que les messages dont l'information d'événement détecté est importante. Le même circuit de gestion applicative peut produire, en réponse à la réception d'un message restitué MES, un message d'accusé de réception respectif à émettre qui est converti par la chaîne d'émission 321-323-325-327 dans la seconde unité de conversion 32 sous la forme d'un signal radioélectrique émis à destination de la balise 5 considérée. Ce message d'accusé de réception indique à la balise 5 la bonne réception du message qu'elle a émis.

Ainsi, l'unité de gestion 31 dans le relais 3 simule la station de connexion 1 vis à vis de la balise 5. L'on verra également ultérieurement que cette même unité de gestion 31 dans le relais peut simuler la balise 5 vis à vis de la station de connexion 1. Il peut être prévu que l'organe de gestion 31 n'intègre une fonction applicative que vis à vis des balises 5 à l'intérieur de la zone d'ombre 4, en se comportant vis à vis de la station de connexion 1 que comme un relais "simple", ou, inversement, que l'organe de gestion 31 n'intègre une fonction applicative que vis à vis de la station de connexion 1, en se comportant vis à vis des balises 5 que comme un relais "simple".

En pratique, il peut également être prévu que le circuit de gestion applicative 312 mémorise les informations d'adresse ou d'identification qui sont incluses dans les messages restitués MES pour adresser, ou interroger, selon une procédure prédéfinie, la balise 5 indépendamment de la station de connexion 1. Dans ce cas, l'unité de gestion 31 produit un message d'interrogation qui est converti par la chaîne d'émission 321-323-325-327 sous la forme d'un signal radioélectrique émis à destination de la balise 5. Cette dernière renvoie alors un message de réponse qui est reçu par voie radioélectrique par le relais 3 pour être converti par la chaîne de réception 326-324-322-321 en un message de réponse restitué.

Dans le cas d'une sélection de certains messages de réponse à réémettre vers la station de connexion 1 parmi tous les messages de réponse reçus, il peut être prévu de ne retransmettre lesdits certains messages de réponse que postérieurement à leur réception. Dans ce cas, ces messages sont mémorisés et reproduits ultérieurement pour être émis sous la forme d'un signal radioélectrique à destination de la station de connexion 1 à travers la chaîne démission 306-304-302. Ces messages pouvant être transmis en différé du relais vers la station de connexion 1, la localisation géographique de la balise 5 peut avoir été modifiée. En outre, le système de localisation de la balise par GPS peut être inopérant en raison de la zone d'ombre. Pour remédier à ces problèmes, il est prévu de modifier partiellement le contenu des messages sélectionnés avant émission, et notamment l'information de localisation et l'information horaire. Pour cela, avant émission différé d'un message, le circuit de gestion applicative 312 sollicite le circuit de gestion de localisation 313 dont une entrée reçoit une sortie du circuit de réception 301. Le circuit de réception 301 reçoit typiquement trois signaux de localisation envoyés par des satellites GPS qui permettent au circuit de gestion de localisation 3131 de déterminer la position du relais, assimilé à la position de la balise 5. Cette information de localisation de la balise est alors transmise au circuit de gestion applicative 312 qui modifie en conséquence le contenu du message à émettre. L'information horaire mémorisée du message à transmettre à destination de la station de connexion 1 est ajoutée par le circuit de gestion applicative 312. Le circuit de gestion applicative modifie ainsi, en conséquence, le contenu de messages restitués pour les émettre à destination de la station de connexion 1.

Selon une réalisation avantageuse, il peut également être pris en compte le fait que, dans un réseau par satellite, le(s) satellite(s) du système, ou réseau, n'assurent pas une couverture totale. Dans ce cas, le circuit de gestion applicative 312 peut mémoriser une carte géographique de la couverture des satellites à chaque instant en fonction de leurs positions, leurs couvertures respectives, etc... Dans ce cas, l'unité de gestion 31 peut retarder l'émission à destination de la station de connexion 1, à travers la chaîne d'émission 306-304-302, des messages reçus en provenance d'une balise donnée à travers la chaîne d'émission 326-324-322-32, en fonction notamment de la position orbitale des satellites, de sorte que lors de l'émission d'un message sous forme d'un sign,al radioélectrique, un satellite soit effectivement présent pour recevoir ce signal émis et le relayer jusqu'à la station de connexion 1.

Bien que l'invention ait été décrite ci-dessus pour une réalisation particulière, l'homme du métier conviendra que sa mise en oeuvre peut être étendue à tout relais destiné à couvrir une zone d'ombre, lequel relais comprend des moyens de gestion applicative pour gérer des messages selon une application donnée. Les termes "application" ou "applicative" sont utilisés ici avec la signification donnée par les recommandations OSI de l'ISO.

## Revendications

1. Relais destiné à être utilisé dans un réseau de radiocommunications pour relayer un échange de données entre des première et seconde stations (1, 5) entre lesquelles un échange de données est impossible à travers le seul réseau de radiocommunications, **caractérisé** en ce qu'il comprend:
des premiers moyens de conversion (30) pour convertir un premier signal radioélectrique reçu en provenance de la première station (1) sous la forme de premiers messages reçus, et convertir des premiers messages à émettre sous la forme d'un premier signal radioélectrique émis à destination de la première station (1),
des seconds moyens de conversion (32) pour convertir un second signal radioélectrique reçu en provenance de la seconde station (5) sous la forme de seconds messages reçus, et convertir des seconds messages à émettre sous la forme d'un second signal radioélectrique émis à destination de la seconde station (5), et
des moyens de gestion applicative (31, 312) pour gérer lesdits premiers messages reçus et à émettre et lesdits seconds messages reçus et à émettre.

2. Relais conforme à la revendication 1, caractérisé en ce que lesdits moyens de gestion simulent ladite première station (1), respectivement seconde station (5), vis à vis de ladite seconde station (5), respectivement première station (1).

3. Relais conforme à la revendication 1 ou 2, caractérisé en ce que lesdits moyens de gestion comprennent des moyens pour mémoriser des données d'identification qui sont reçues en provenance de l'une au moins desdites première et seconde stations (1, 5), pour adresser ladite première, respectivement seconde, station.

4. Relais conforme à l'une quelconque des revendications 2 ou 3, caractérisé en ce que lesdits moyens de gestion (31, 312) comprennent des moyens pour produire un message d'interrogation qui est converti par lesdits seconds moyens de conversion (32) sous la forme dudit second signal radioélectrique émis à destination de ladite seconde station (5).

5. Relais conforme à la revendication 4, caractérisé en ce que lesdites moyens de gestion comprennent des moyens pour sélectionner certains seconds messages de réponse parmi des seconds messages de réponse reçus issus desdits seconds moyens de conversion, en réponse à l'émission sous la forme dudit second signal radioélectrique, de messages d'interrogation respectifs, et des moyens pour reproduire lesdites certains seconds messages de réponse sélectionnés, en des premiers messages émis sous la forme dudit premier signal radioélectrique à destination de la première station.

6. Relais conforme à l'une quelconque des revendications 2 à 5, caractérisé en ce que lesdits moyens de gestion comprennent des moyens pour produire des messages d'accusé de réception à émettre qui sont convertis par lesdits premiers moyens de conversion sous la forme du premier signal radioélectrique émis à destination de la première station.

7. Relais conforme à l'une quelconque des revendications précédentes, caractérisé en ce que ledit réseau de radiocommunications est un réseau par satellite, et en ce que lesdits moyens de gestion (31, 312) comprennent des moyens pour retarder l'émission à destination de ladite première station (1), à travers lesdits premiers moyens de conversion (30), de messages reçus en provenance de ladite seconde station (5), à travers lesdits seconds moyens de conversion, en fonction d'une position orbitale d'un satellite (2).
